# EUROPEAN PATENT APPLICATION

(11) **EP 3 673 750 A1**
(43) Date of publication of application: **01.07.2020**
(21) Application number: 18847831.7
(22) Date of filing: 21.08.2018
(51) Int. Cl.: A23L 27/00, A23L 27/22, A23L 27/24, A23L 27/50, A23L 31/15

(54) **METHOD FOR MANUFACTURING SEASONING**

(30) Priority: 23.08.2017 JP 2017159893; 30.03.2018 JP 2018067875
(71) Applicant: Mitsubishi Corporation Life Sciences Limited, Tokyo 100-0006 (JP)
(72) Inventor: AIDA, Shiroh, Saiki-shi Oita 876-8580 (JP); MORIMOTO, Yorikazu, Saiki-shi Oita 876-8580 (JP); YOSHIMATSU, Akifumi, Tokyo 100-0006 (JP); MURATA, Yoshifumi, Tokyo 100-0006 (JP); KUSUMOTO, Hiroki, Tokyo 100-0006 (JP)
(74) Representative: Müller-Boré & Partner Patentanwälte PartG mbB
(86) International application number: PCT/JP2018/030826
(87) International publication number: WO 2019/039470

(57) **Abstract**

The present invention addresses the problem of providing a method for manufacturing a variety of seasoning ingredient liquids having a high extract solids content, the method making it possible to prevent a decrease in collection rate due to burning and quality degradation due to microbial contamination while improving productivity through a continuous heating process performed for a short period of time, and to impart superior flavors and impart flavors in a more versatile manner while inhibiting the destruction of taste-contributing components. As a result of thoroughgoing investigations into solving the above problem, the inventors of the present invention perfected the present invention upon discovering a method for manufacturing a seasoning in which a direct steam-heating cooker is used, whereby a desired flavor is imparted in a mild manner within 60 seconds while a continuous heating treatment at 130°C or above is performed, and destruction of taste-imparting components can be minimized.

## Description

### Technical Field

The present invention relates to a method for producing a seasoning based on a seasoning ingredient having a high extract component in which microorganisms are controlled in a superior manner while minimizing destruction of flavor components such as taste nucleic acid and sodium glutamate and a decrease in collection rate, and the flavor can be freely controlled by heating for a short period of time.

### Background Art

In recent years, interest in diversifying food preferences, shortening cooking time, and food products having a long storage life has been increasing. Improvements in packaging materials and packing techniques lead to an expanded distribution of small-scale products that have been consumed in certain regions. Under the circumstance, development of general seasonings, such as pot soup and highly concentrated dashi used for Japanese food and dressings and sauces used for many food products, is progressing, and the types of seasonings are increasing.

Due to the diversification of food preferences, the use of seasonings that are complex and rich in umami, for example, yeast extract, is expanding. Such seasonings are characterized by having a flavor and an aroma rich in palatability, and contain many components. The seasonings contain, for example, amino acids with superior umami and taste such as glutamic acid, aspartic acid, glycine or alanine; nucleic acids such as guanylic acid and inosinic acid known as umami of dried bonito and shiitake mushroom; as for organic acids, succinic acid known as umami of shellfish, or their salts; as well as peptides such as glutathione and y-glutamyl-L-cysteinyl-glycine that enhance taste; fat and oil, gelatins, sugars such as glucose, lactose, and sucrose; furfural, pyrazine, higher alcohol, and higher aldehyde derived through simultaneous progression of the Maillard reaction or Strecker decomposition reaction by heating simple sugars or sugars and amino acids, which are typified by caramel flavors and roasted flavors of stir-fried dishes; or ester.

Various raw materials may be needed in order to produce the seasonings rich in palatability. As a result, undesirable flavors may be imparted. As a superior seasoning production method for reducing undesirable flavors, various production methods have been reported, such as addition of collagen peptide and specific sterilization conditions (Patent Literature 3).

In a method for producing a seasoning by heating, for example, as a seasoning having a beef flavor, there is disclosed a Maillard reaction type seasoning produced by heating an aqueous solution or an aqueous suspension containing a 5'-nucleotide-containing yeast extract, a glutathione-containing yeast extract, monosaccharides, dextrin, and salt at 70 to 150°C, preferably 90 to 120°C for about 10 minutes to 2 hours (for example, see Patent Literature 1).

In a new method for producing the above beef flavor, a yeast extract heated reaction product containing 20 ppm or more of furfuryl alcohol and 10 ppm or more of furaneol per yeast extract (dry weight) has been found by subjecting a mixture containing yeast extract and reducing sugar to heating process at 90 to 150°C, preferably at 100 to 120°C, for 1 minute to 4 hours, preferably for 30 minutes to 1 hour (for example, see Patent Literature 6).

In food products, the Maillard reaction is particularly well known as a non-enzymatic browning reaction. While many of the substances produced by this reaction pathway are colorless, not only brown substances but also yellow, red, and blue substances are produced. The Maillard reaction is affected by the heating temperature, the heating and holding time, the water content (water activity), the lipid content, and the like. Since the temperature, pH, and pressure at which the reaction rate in the production of each substance is maximized are also different, these conditions play an important role in flavor and color formation, particularly in food products containing many amino compounds and carbonyl compounds such as seasonings (Non Patent Literature 1). In food products, there have been reported multiple examples in which the same substance as the starting substance of a reaction is used, but the substance produced varies depending on the temperature (Non Patent Literature 2). For example, sucrose and glutamic acid produce a caramel-like aroma at 100°C, while a roast meat-like aroma is observed at 150°C.

In the heating process in industrial production, direct heating with a direct fire or indirect heating with a jacket takes time for heating. There is a concern that the freshness may decrease, the original flavor may disappear, overheating may occur due to an excessively narrow optimal heating time range, and destruction of the taste-imparting components may be caused. Further, the flavor to be imparted becomes unbalanced, such as a feeling of livestock meat or a feeling of fish (Patent Literature 2), and it can be added only to limited food products. Thus, it is difficult to control flavor impartation optimally or arbitrarily.

Further, in the production of seasonings, it is important to control microbial contamination to prevent quality deterioration. For example, a method for producing a fermented seasoning has also been found in which a liquid seasoning containing solid materials such as cut vegetables, grated vegetables, and sesame seeds is heat-processed at a high temperature of 90 to 130°C for a short time of 1 to 300 seconds using an indirect heating unit having a fixed stirring mechanism in a processing liquid flow path, microbial hygiene control is easily conducted in the production step, and sterilization can be performed under mild conditions (Patent Literature 4). In order to reduce unpleasant flavors and control microorganisms, a method is provided in which sterilization is performed by direct steam heating and then the flavor is removed using vacuum flash cooling (Patent Literature 5).

Against this background, in terms of production facility, there are problems, such as the occupation of facility due to a batch process using a dedicated heating tank; load on workers due to repeated batch process switching operations; influences on products caused by the fact that when the extract component is high, it is very easy to burn due to influences such as water activity to be affected by the solid content composition, amino acid, organic acid, sugar, mineral, and pH; complicated processing line cleaning procedures due to the influences; and difficulty in controlling microorganisms due to insufficient sterilization temperature. Accordingly, the facility becomes large-scale, there is no method for producing a seasoning having a superior flavor that can be sufficiently satisfied in view of cost and production efficiency, and development of the seasoning has been awaited.

Furthermore, the addition of synthetic preservatives and shelf life improvers has tended to be shunned in recent years, reflecting consumers' "natural" or "native" preferences. Therefore, it is necessary to devise a production step that involves heat-resistant bacteria responsible for deterioration.

### Citation List

### Patent Literature

Patent Literature 1: JP 2007-259744 A
Patent Literature 2: JP 2009-207432 A
Patent Literature 3: JP 2015-008682 A
Patent Literature 4: JP 2000-166500 A
Patent Literature 5: JP 2008-237085 A
Patent Literature 6: WO 2013/140901

### Non Patent Literature

Non Patent Literature 1: Chemistry of Non-Enzymatic Browning Phenomenon, Chemistry of Discoloration in Foods, Hiromichi Kato et al., Kohrin Shoin, 1995
Non Patent Literature 2: Chemistry of Discoloration in Foods, Susumu Kimura et al., Kohrin Shoin, 1995

### Summary of Invention

### Technical Problem

An object of the present invention is to provide a method for producing a variety of seasoning ingredient liquids having a high extract solid content, the method making it possible to prevent a decrease in collection rate due to burning and quality deterioration due to microbial contamination while improving productivity through a continuous heating process performed for a short period of time, to impart a flavor superior in terms of production cost and controllability while inhibiting the destruction of taste-contributing components, and to impart a flavor in a more versatile manner.

### Solution to Problem

The present inventors have conducted intensive studies for solving the above-described problems. As a result, they have found a method for producing a seasoning in which a desired flavor is imparted in a mild manner within 60 seconds while performing a continuous heating process at 130°C or more using a direct steam-heating cooker, and destruction of taste-imparting components can be minimized, and have completed the present invention.

That is, the present invention is as follows.
(1) A method for producing a seasoning in which a seasoning ingredient is heat-processed with steam, where, as a heating method, heating was performed by an infusion type direct heating method, and, after heating, cooling was performed by a reduced pressure cooling method.
(2) The method for producing a seasoning according to (1), where the heating temperature is 120 to 170°C, the heating time is 0.1 to 60 seconds, and the temperature is reduced to 100°C or less by a reduced pressure cooling method after heating.
(3) The method for producing a seasoning according to (1) or (2), where the temperature is allowed to reach the heating temperature in an atmosphere in which a saturated steam of 0.2 to 0.8 MPa is filled in a heating can.
(4) The production method according to any one of (1) to (3), where heating conditions are as follows: a temperature difference from a liquid temperature of the seasoning ingredient immediately before heating is 30°C or more; and an amount of time elapsed between start of heating and completion of reaching the temperature is 0.5 seconds or less.
(5) The production method according to any one of (1) to (4), where the seasoning ingredient is adjusted so as to have a solid content of 5 to 70 wt% and heat-processed.

### Advantageous Effects of Invention

According to the present invention, the infusion type direct heating method is combined with the reduced-pressure cooling method, whereby even when suppressing decomposition of glutamic acid, i.e., a taste-imparting substance as a seasoning, guanylic acid and inosinic acid, i.e., taste nucleic acids, and glutathione, i.e., peptide for enhancing rich taste, flavor can be imparted by heating with superior controllability while suppressing coloring. Further, since the heating and holding time is as short as 60 seconds or less, continuous process reduces washing and switching operations of the heater. This leads to labor savings, and also reduces the amount of steam required for heating, which is advantageous in terms of cost. Further, since even a concentrated extract that may be blocked by scaling can be used, it can be used for various seasonings. Furthermore, since the method includes a step of heating at a high temperature, heat-resistant bacteria can be reduced.

### Description of Embodiments

Hereinafter, the present invention will be described in detail for the understanding of the present invention. However, the present invention is not limited to the following preferred embodiments, and can be freely modified within the scope of the present invention. Note that, in this specification, percentages are indicated by "mass" or "weight" (wt%) unless otherwise specified.

As a seasoning ingredient used in the method of the present invention, a food material or any one derived from a food material can be used. Examples thereof include grains (such as non-glutinous rice, glutinous rice, wheat, barley, rye, oat, adlay, corn, and buckwheat) and their processed products; vegetables (such as tomato, onion, carrot, leek, green onion, celery, garlic, bell pepper, broccoli, pumpkin, asparagus, spring chrysanthemum, and burdock) and their processed products; wild vegetables such as Japanese basil, shallot, Chenopodium album, arrowroot, horsetail, flowering fern, Japanese parsley, watercress, Allium macrostemon, licorice, and mugwort; spices and herbs (such as ginger, pepper, star anise, Sichuan pepper, cinnamon, herbs, basil, oregano, thyme, Laurier, coriander, mint, anise, Sansho peppercorn, wasabi, and mustard) and their processed products; flowers (such as dandelion, rape blossom, Chinese milk vetch, camellia, safflower, violet, Japanese cherry, rose, and Japanese bindweed) and their processed products; beans (such as soybean, pea, red bean, black bean, pine nut, May flower, apricot kernel, walnut, almond, chestnut, peanut, and sesame) and their processed products; fruits (such as mandarin orange, Japanese citron, Kabosu, orange, Japanese plum, loquat, persimmon, apple, wolfberry, jujube, pear, grape, fig, papaya, pineapple, mulberry, blueberry, and raspberry) and their processed products; livestock (such as cattle, pig, sheep, goat, chicken, duck, quail, and pheasant) and their processed products; yeasts of baker's yeast, beer yeast, torula yeast, lactic acid bacteria, acetic acid bacteria, yeasts of rice malt, shiitake mushroom, maitake mushroom, shimeji mushroom, eryngii mushroom, Amanita hemibapha, cloud ear mushroom, and the like, or fungi including mushrooms; shellfishes and seaweeds (such as asari clam, shijimi clam, common orient clam, oyster, scallop, bonito, tuna, salmon, horse mackerel, flying fish, anchovy, squid, octopus, sea cucumber, jellyfish, shrimp, mysid, crab, kelp, hijiki, wakame, and laver) and their processed products; eggs and dairy products such as egg, butter, fresh cream, sour cream, and cheese; fats and oils such as olive oil, sunflower oil, canola oil, perilla oil, sesame oil, lard, chocolate, and cocoa; sugars (such as sugar cane, maple syrup, honey, starch syrup, sugar alcohol, dextrin, corn starch, starch, and brown sugar) and their processed products; vinegar; alcoholic beverages (such as wine, sake, mirin, beer, whiskey, and brandy) and their processed products; beverage materials (such as coffee, black tea, green tea, oolong tea, jasmine tea, rooibos tea, and theanine) and their processed products; and food materials such as fat and oil, gelatins, thickening polysaccharides, glucose, lactose, and sucrose. According to the present patent, a seasoning superior in flavor in which destruction of the taste-imparting components is minimized can be obtained by performing a heating process on a seasoning stock solution containing an extract component extracted by heating or aging and fermenting or pressing one or more of those materials described above.

Examples of the taste-imparting components listed in the present invention include amino acids having superior umami and taste, such as glutamic acid, aspartic acid, glycine, and alanine; nucleic acids such as guanylic acid and inosinic acid known as umami of dried bonito and shiitake mushroom; organic acids including succinic acid known as umami of shellfish, or salts thereof; and peptides such as glutathione and y-glutamyl-L-cysteinyl-glycine to enhance taste, particularly, glutamic acid and a sodium salt thereof, guanylic acid, inosinic acid, and glutathione.

The heating method according to the present invention uses a series of heating and cooling devices including at least a direct steam-heating cooker for bringing heating steam into direct contact with a seasoning ingredient to raise the temperature, a retention pipe for maintaining a target heating temperature, and a cooling can being a vacuum and reduced pressure cooling type and capable of rapidly cooling. The device may include a heater for preheating before feeding into the cooker. Further, the device may further include a cooling device after cooling under reduced pressure as a multi-stage cooling method, or may include a homogenizer device for homogenizing the heated seasoning stock solution.

The type of the direct steam-heating cooker according to the present invention includes a steam infusion type and a steam injection type. In the present invention, the steam infusion type is used. Hereinafter, this type or device is referred to as "infusion", unless otherwise specified. The infusion type direct steam cooker discharges a seasoning ingredient to the inside of a heating chamber (inside of the direct steam-heating cooker) filled with pressurized steam. At this time, the seasoning ingredient comes into contact with steam and the steam flows into the seasoning ingredient, whereby the seasoning ingredient is heated to a predetermined temperature.

Pure steam obtained by indirectly heating ion-exchanged water or pure water obtained by further distilling the ion-exchanged water, or steam of a grade approved for food and drink needs to be used as the steam for heating.

The method for imparting flavor by heating in the present invention is presumed to be a Maillard reaction type. Therefore, the heating process in the present invention is performed under conditions in which the temperature is instantaneously increased to 120 to 170°C, more preferably 130 to 160°C within 1 second. The heating and holding time can be arbitrarily selected from 0.1 to 60 seconds. The heating temperature is maintained by a retention pipe of a predetermined length after passing through the direct steam-heating cooker. The heating and holding time is adjusted by the length of the retention pipe and the convection velocity. Further, the above-described heating temperature of the present invention refers to the temperature of the seasoning ingredient immediately after passing through the direct steam-heating cooker. At this time, the saturated steam pressure for heating in the direct steam-heating cooker is particularly preferably 0.2 to 0.7 MPa, and more preferably 0.3 to 0.60 MPa. The seasoning ingredient is instantaneously heated within 0.5 seconds by discharging the seasoning ingredient from the upper part of the inside of the cooker in the target atmosphere of the heating temperature and the heating pressure. Note that it is possible to confirm whether the temperature of the seasoning ingredient reaches the target temperature based on the temperature of the seasoning ingredient immediately before being directly supplied to the direct steam-heating cooker, and the time and temperature required to reach the retention pipe. Further, the method of charging the seasoning ingredient into the cooker is not particularly limited as long as the conditions described in the entire description are satisfied. For example, the seasoning ingredient may be discharged in the form of a line or in the form of shower, or may be dropped.

Furthermore, it is necessary that, after reaching the target heating residence time, the seasoning stock solution is rapidly cooled to preferably 100°C or less, and more preferably 90°C or less by blowing it into a cooling can in a vacuum and reduced pressure atmosphere, thereby instantaneously stopping the reaction caused by heating.

In the present invention, when the seasoning ingredient is heated, the solid content in the liquid is adjusted to 5 to 70%, and is supplied to the direct steam-heating cooker. In the production of the seasoning, ingredients usable for food products as excipients such as cyclodextrin, starch, and salt may be mixed. These excipients may be mixed after the heating reaction.

After the heating reaction, the seasoning may be used as it is, or may be concentrated and used as a paste, or may be dried, for example, powdered by a spray drier, a drum drier, a reduced pressure drier, a freeze drier, or the like.

In the heating step of the present invention, since the treatment can be performed at a high temperature, it is possible to sterilize general viable bacteria, coliform bacteria, yeasts, anaerobic gas-producing bacteria, bacteria glowing at 55°C, heat-resistant bacteria, and the like. In particular, it also has a bactericidal effect on the heat-resistant bacterium Geobacillus stearothermophilus (hereinafter abbreviated as "G. stearothermophilus"), which is also an indicator bacterium for food sterilization tests.

The seasoning obtained by the present invention can be applied to a wide range of fields, and can be used for soups, seasonings, seasoned dried foods (frikake), instant foods or snack foods, canned foods, retort foods, and a wide variety of other foods. In particular, even for canned foods to be sold that are kept warm in the neutral region such as pH 6 to 8, the risk of spoilage and gas generation due to heat-resistant bacteria is significantly reduced. Thus, cooked foods to which the seasoning obtained in the present invention is added can be sterilized under mild conditions by avoiding excessive heat sterilization that destroys the texture that influences flavor and food texture.

### <Method for Measuring Glutamic Acid and Glutamine>

The glutamic acid content in the seasoning ingredient can be measured by an ordinary method for quantifying glutamic acid, for example, using a biosensor BF-5 (manufactured by Oji Scientific Instruments) equipped with enzyme electrodes for glutamic acid and glutamine, or using a fully automatic amino acid analyzer (manufactured by Hitachi, Ltd.) In the former, a sample to be used was diluted with ultrapure water so that the glutamic acid or glutamine content in the yeast extract was 5 nmol/L or less.

### <Method for Measuring Glutathione>

Further, the glutathione content in the seasoning ingredient, including glutathione and its derivatives, can be measured using HPLC (manufactured by Hitachi High-Technologies Corporation). For example, a measurement sample was obtained by appropriately diluting with ultrapure water so that the glutathione content was 0.2 g/L or less, an ODS column (inner diameter: 4.6 mm, length: 150 mm, particle size: 5 µm) was used, and a 0.05 M phosphate buffer to which methanol and heptanesulfonic acid were appropriately added was used as an eluent. Detection was performed at UV 210 nm. The glutathione content was determined from the area of the peak obtained by injecting the sample.

### <Method for Measuring Nucleic Acid>

The contents of guanylic acid and inosinic acid can be measured by using HPLC (manufactured by Hitachi High-Technologies Corporation) and measuring them together with nucleic acids such as cytidylic acid, adenylic acid, and uridylic acid. For example, a sample was obtained by appropriately diluting with ultrapure water so that the nucleic acid content in the seasoning was 0.02% or less, and a column (MCL GEL CDR10 (4.6 mm × 250 mm), manufactured by Mitsubishi Chemical Corporation) was used, and 2M acetic acid-ammonium acetate (pH 3.3) was used as a mobile phase. Detection was performed at UV 260 nm. Each of the standard reagents whose concentrations were determined in advance was subjected to HPLC together with the test sample, and the resulting peak areas were compared to determine the content.

### <Method for Measuring Turbidity and Coloring>

The sample used for this measurement was subjected to centrifugation at 10,000 rpm for 3 minutes in advance to remove insoluble matters such as sediments, and then used. For coloring, the absorbance at a wavelength of 520 nm was measured, and the intensity at this time was evaluated as the intensity of red coloration. Similarly, the absorbance at 430 nm was measured, and the intensity was evaluated as the intensity of coloration to yellow. The turbidity was evaluated by measuring the absorbance at a wavelength of 600 nm.

### <Method for Measuring Organic Acid and Pyroglutamic Acid>

The organic acid to be measured includes 10 kinds of organic acids: α-ketoglutaric acid, citric acid, malonic acid, malic acid, succinic acid, fumaric acid, lactic acid, formic acid, acetic acid, and pyroglutamic acid. The sample to be measured was diluted with ultrapure water so that its organic acid content was about 200 ppm, and the measurement was performed by HPLC analysis based on a post-column pH buffered electric conductivity detection method. The used column was Shim-pack SCR-102H × 2.

### <Evaluation of Heat-Resistant Bacteria>

In this example, a commercially available strain MMID 1607170 (manufactured by Mitsui Norin Co., Ltd.) was selected from G. stearothermophilus as a standard indicator bacterium for the sterilization test. In the tests of Examples 1 to 5, the spores of this bacterium were appropriately added immediately before heating the seasoning ingredient sample so that the number of spores became 10⁴ after dilution. 1 mL from the solution collected after the heating test was transferred to a sterilized Falcon tube and heated in a hot-water bath at 100°C for 5 minutes. Only viable bacteria were killed, and then 1 mL of the solution was 10-fold diluted with 9 mL of sterile water. After confirming that the temperature of the sterilized standard agar medium prepared in parallel was 50°C or less, 1 mL of the diluted sample was transferred to a sterilized petri dish, 9 mL of the medium was poured into the plate and mixed quickly. The solidification of the medium was confirmed, culturing was carried out in an incubator at 55°C for 72 hours, and the number of colonies was counted to evaluate the mortality.

### <Sensory Evaluation 1>

In Sensory Evaluation 1, four trained panelists compared the test sections for aroma, flavor, umami, richness, and saltiness, and evaluated the strength on a 20-point scale of -1.0 to +1.0. Note that plus indicates that each of the test sections is "stronger" than that of the standard product, and minus indicates that each of the test sections is "weaker" than that of the standard product. The evaluation results are shown in Table 3 (high nucleic acid-based glutamate seasoning), Table 6 (high glutamate-based seasoning), Table 9 (high glutamate-based nucleic acid seasoning), and Table 12 (high glutathione-based seasoning). The used standard product was a commercially available seasoning ingredient powder used in the test.

### <Evaluation Items>

Aroma: odor when each panelist smelled each sample
Flavor: odor when the sample was put into the mouth, odor and taste returned when the panelist swallowed the sample
Umami: dashi-like taste
Richness: persistence, spread, and thickness of taste
Saltiness: saltiness when the sample was put into the mouth
<Evaluation Criteria>
Evaluation stage-evaluation criteria
(+/-) 0.0: the sample is the same as the standard product
(+/-) 0.1 to 0.2: the sample is slightly different from the standard product, which is within an equivalent range
(+/-) 0.3 to 0.5: it is within an acceptable range
(+/-) 0.6 to 0.7: each panelist feels the difference but it is within an acceptable range
(+/-) 0.8 to 0.9: the panelist feels a big difference
(+/-) 1.0: the panelist feels a pretty big difference

### <Sensory Evaluation 2>

In Sensory Evaluation 2, similarly to paragraph 0034, 17 trained panelists compared one item of the entire aroma with a standard product and evaluated it on a 0 to 1 point scale (in 0.1-point increments). In one evaluation, the standard product (a heating method of the related art) and an evaluation sample (a product of the present invention) were compared with each other and evaluated. The test was conducted so that the panelists did not know the target sample name. The evaluation results are shown in Table 13 (heating of kiage soy-sauce). The used standard product was a seasoning stock solution used for the test. Examples

Hereinafter, the present invention will be described in detail with reference to Examples, however the present invention is not limited to these Examples.

### <Example 1>

### (1) Production of High Nucleic Acid-based Glutamate Seasoning

### Example 1

A strain of Candida utilis (FERM BP-1656) was preliminarily cultured in an Erlenmeyer flask containing a YPD medium, and this culture solution was inoculated into a 5L fermenter at 0.5 to 1.5%. Culture conditions were as follows: tank volume 2 L, pH 4.5, culture temperature 30°C, aeration 1 vvm, stirring 600 rpm. The culture solution was collected while cooling on ice, and cells were collected by centrifugation to obtain wet yeast cells. The wet yeast cells were resuspended in water and centrifuged to obtain about 160 g of dry cells as dry weight. The yeast cells were suspended in water to make a total volume of 1.6 L, and then heated in a hot-water bath. After the temperature reached 70°C, the suspension was kept at 70°C while stirring for 10 minutes and the extract was extracted. Thereafter, the pH was adjusted to 5.0 by adding sulfuric acid. Then, 5'-phosphodiesterase (product name: Sumiteam NP, manufactured by SHINNIHON CHEMICALS Corporation) was added thereto, and the mixture was incubated at 70°C for 6 hours to perform nuclease treatment. The temperature of the yeast extract after the nuclease treatment was adjusted to 50°C, 5'-adenylate deaminase (product name: Deamizyme G, manufactured by Amano Enzyme Inc.) was added to the yeast extract, and the deaminase treatment was performed by incubating at 50°C for 3 hours. After the deaminase treatment, the following heating process was performed.

The nucleic acid content (5'-IMP + 5'-GMP) in the sample was 20 wt% per solid content, and the sodium glutamate content was 5 wt% per solid content.

### (2) Seasoning Heating Process

In a Steam Infusion small UHT device (manufactured by Powerpoint international Ltd, hereinafter referred to as "infusion"), the pre-heating temperature was set to 120°C and the main heating temperature was set to 140°C. A reduced pressure cooling pipe was set to 120°C or 0.12 MPa. After the temperature of a primary cooling pipe reached 110°C, the temperature was maintained for 15 minutes to sterilize the heating line. After completion, the pre-heating temperature was set to 80°C, the main heating was set to 150°C, the heating and holding times were set to 10 seconds, 20 seconds, and 30 seconds, respectively. The vacuum pressure was adjusted so that the flash cooling temperature was 80°C. In parallel, 5 L of the seasoning stock solution of Production Example 1 obtained in (1) was mildly heated to 58 to 60°C and dissolved using a water bath. When the operating temperature of each part of the infusion was stabilized, the sample during heating was charged and processed at 20L/hr or 30L/hr. The sample was immediately cooled and then subjected to refrigerated storage to obtain the composition of Example 1. Note that, the standard product used for the sensory evaluation was subjected to the steam injection method. The heating temperature was 120°C, the residence time was 10 seconds, and the cooling after heating was performed by an indirect cooling method (the same heating conditions were used for the standard products in Examples 2 to 5).

### <Example 2>

### (1) Production of High Glutamate-based Seasoning

Glutamate-rich yeast extract was prepared by preliminarily culturing Candida utilis (Accession No. FERM P-21546) in an Erlenmeyer flask containing a YPD medium and inoculating it into a 5L fermenter at 0.5 to 1.5%. Culture conditions were as follows: tank volume 2 L, pH 4.5, culture temperature 30°C, aeration 1 vvm, stirring 600 rpm. The culture solution was collected while cooling on ice, and cells were collected by centrifugation to obtain wet yeast cells. The wet yeast cells were resuspended in water and centrifuged to obtain about 160 g of dry cells as dry weight. The yeast cells were suspended in water to make a total volume of 1.6 L, and then heated in a hot-water bath. After the temperature reached 70°C, the suspension was kept at 70°C while stirring for 10 minutes and the extract was extracted. Immediately after this process, the extract was cooled in running water, and insoluble solids were removed by centrifugation to obtain an extract. After the liquid temperature of the extract was adjusted to 50°C, 4.4 g of Glutaminase Daiwa C100S (manufactured by Daiwa Fine Chemicals Co., Ltd.) dissolved in a small amount of water was added to the extract and reacted at 40 to 60°C for 5 hours while stirring. The extract was heated at 90 to 95°C for 30 minutes, cooled, and then insoluble solids in the extract were removed again by centrifugation. The obtained product was subjected to the following heating process. The nucleic acid content (5'-IMP + 5'-GMP) in the sample was 0.3 wt% per solid content, and the sodium glutamate content was 31 wt% per solid content.

### (2) Seasoning Heating Process

The heating process was performed in a similar manner as in paragraph 0037, except that the main heating temperature and the heating and holding time were set to 140°C and 4 seconds, 140°C and 15 seconds, 140°C and 30 seconds, and 150°C and 30 seconds, respectively. The obtained sample was designated as the composition of Example 2.

### <Example 3>

### (1) Production of High Glutamate-based Nucleic Acid Seasoning

For the trial production of the yeast extract, a culture solution of Candida utilis (Accession No. FERM P-21546) strain was used. The test strain was preliminarily cultured in an Erlenmeyer flask containing a YPD medium, and this culture solution was inoculated into a 5L fermenter at 0.5 to 1.5%. Culture conditions were as follows: tank volume 2 L, pH 4.5, culture temperature 30°C, aeration 1 vvm, stirring 600 rpm. The culture solution was collected while cooling on ice, and cells were collected by centrifugation to obtain wet yeast cells. The wet yeast cells were resuspended in water similarly to paragraph 0037 and centrifuged to obtain about 21 g of dry cells as dry weight.

Water was added to the yeast thus obtained to bring the total volume to 200 ml, and heated in a hot-water bath. After the temperature reached 90°C, the resulting mixture was heated at 90°C for 2 minutes. The mixture was immediately cooled in running water, and then the pH was adjusted to 5.0 by adding sulfuric acid. Then, 5'-phosphodiesterase (product name: Sumiteam NP, manufactured by SHINNIHON CHEMICALS Corporation) was added thereto, and the mixture was incubated at 70°C for 6 hours to perform nuclease treatment. The temperature of the yeast extract after the nuclease treatment was adjusted to 50°C, 5'-adenylate deaminase (product name: Deamizyme G, manufactured by Amano Enzyme Inc.) was added to the yeast extract, and the deaminase treatment was performed by incubating at 50°C for 3 hours. After the deaminase treatment, the following heating process was performed. The nucleic acid content (5'-IMP + 5'-GMP) in the sample was 3 wt% per solid content, and the sodium glutamate content was 25 wt% per solid content.

### (2) Seasoning Heating Process

The heating process was performed in a similar manner as in paragraph 0037, except that the main heating temperature and the heating and holding time were set to 140°C and 4 seconds, 140°C and 15 seconds, 140°C and 30 seconds, and 150°C and 30 seconds, respectively. The obtained sample was designated as the composition of Example 3.

### <Example 4>

### (1) High Glutathione-based Seasoning

The effect of heating process was examined using a yeast extract containing 15% reduced glutathione ("Hithion Extract YH15", manufactured by KOHJIN Life Sciences Co.,Ltd.). The yeast extract was suspended in water so as to form a 30% suspension, and the following heating process was performed. The nucleic acid content (5'-IMP + 5'-GMP) in the sample was 0.1 wt% per solid content, the sodium glutamate content was 7 wt% per solid content, and the reduced glutathione content was 15 wt% per solid content.

### (2) Seasoning Heating Process

The heat treatment was performed in a similar manner as in paragraph 0037, except that the main heating temperature and the heating and holding time were set to 140°C and 4 seconds, 140°C and 15 seconds, 140°C and 30 seconds, 150°C and 30 seconds, and 150°C and 60 seconds, respectively. The obtained sample was designated as the composition of Example 4.

### <Example 5>

### (1) Sample Adjustment of Glutamic Acid Sodium Salt

Sodium glutamate monohydrate (manufactured by DAESANG) was adjusted so as to have the same content and pH as those of the high glutamate-based seasoning used in Production Example 2. The target sodium glutamate anhydrate content was 12% and the reagent was added 1.1 times the original amount considering one water molecule. The pH was adjusted to 5.5 with 6N, 9N, and 12N dilute hydrochloric acid. The weighed reagent was diluted in a measuring flask to 5L with ion-exchanged water.

### (2) Seasoning Heating Process

The heating process was performed in a similar manner as in paragraph 0037, except that the main heating temperature and the heating and holding time were set to 140°C and 4 seconds, 140°C and 15 seconds, 140°C and 30 seconds, and 150°C and 30 seconds, respectively. The obtained sample was designated as the composition of Example 5.

### <Example 6>

### (1) Method for Adjusting Kiage Soy-Sauce

The heating method of the present invention was performed using commercially available kiage soy-sauce under the following conditions.

### (2) Seasoning Heating Process

In the infusion, the pre-heating temperature was set to 120°C, the main heating temperature was set to 140°C. The reduced pressure cooling pipe was set to 120°C or 0.12 MPa. After the primary cooling pipe reached 110°C, the temperature was maintained for 15 minutes to sterilize the heating line. After completion, the pre-heating temperature was set to 80°C, the main heating temperature and the heating and holding time were set to 130°C and 4 seconds, 140°C and 4 seconds, 140°C and 30 seconds, and 150°C and 30 seconds, respectively. The vacuum pressure was adjusted so that the flash cooling temperature was 75°C. When the operating temperature of each part of the infusion was stabilized, a sample being cooled at 5°C was charged and processed at 20L/hr or 30L/hr. The sample was immediately cooled and stored to obtain the composition of Example 6. The standard product used for the sensory evaluation was obtained by a method for being kept in an 80°C water bath for 30 minutes after reaching the temperature.

### <Evaluation of Example 1>

### (High nucleic acid-based glutamate seasoning)

In the seasoning obtained in Example 1, as shown in Table 1, the coloring progressed by about 1.1 times in the case of heating at 150°C for 4 seconds. However, there was no clear difference in the test sections having different heating and holding times, and no difference in turbidness between before and after heating was observed.

The overall quality of taste was evaluated as plus ("strong"). In the case of heating at 150°C for 10 seconds, the taste was once stagnant, however the flavor, aroma, and umami could be improved in accordance with the heating and holding time. At this time, the flavor was evaluated as "savory", which is considered to be an increase in Maillard-type flavor. The flavor was good even in the case of heating at 150°C for 30 seconds, and the overall palatability was not lost. Guanylic acid and inosinic acid, which contribute to the taste of the seasoning, remain at 90% or more even in the case of heating at 150°C for 30 seconds, and sodium glutamate remains at 80% or more. Considering the fact that 30% or more of the components are destructed even in the case of batch heating at 120°C, it suggests that the flavor can be improved while minimizing the destruction of the taste-imparting components. The heating and holding time was determined by the length of the retention pipe attached between the heating cooker for mixing the seasoning with the steam and the reduced-pressure cooling can, and thus it was easy to control the time. On the other hand, as a result of confirming the bactericidal properties of the heat-resistant bacterium G. stearothermophilus, 1/1000 or less of cells were killed when heated at 150°C for 4 seconds. Accordingly, this infers that it is possible to provide a seasoning in which microorganisms responsible for deterioration of food products are reduced.

### <Table 1>

**Table 1: Change in turbidness and coloring in high nucleic acid-based glutamate seasoning before and after heating**

| | Turbidity (600 nm Abs) | Red (520 nm Abs) | Yellow (430 nm Abs) |
|---|---|---|---|
| Before heating | 0.068 | 0.039 | 0.173 |
| 150°C 4 seconds | 0.066 | 0.045 | 0.184 |
| 150°C 10 seconds | 0.065 | 0.046 | 0.195 |
| 150°C 20 seconds | 0.052 | 0.044 | 0.189 |
| 150°C 30 seconds | 0.067 | 0.045 | 0.195 |

### <Table 2>

**Table 2: Change in taste quality of high nucleic acid-based glutamate seasoning due to heating**

| | 150°C 4 seconds | 150°C 10 seconds | 150°C 20 seconds | 150°C 30 seconds |
|---|---|---|---|---|
| Aroma | 0.05 | 0.03 | 0.10 | 0.15 |
| Flavor | 0.28 | 0.18 | 0.23 | 0.40 |
| Umami | 0.15 | 0.23 | 0.08 | 0.23 |
| Rich taste | 0.25 | 0.15 | 0.15 | 0.20 |
| Saltiness | 0.10 | 0.03 | 0.03 | 0.03 |

### <Table 3>

**Table 3: Residual ratio of taste-imparting components in high nucleic acid-based glutamate seasoning before and after heating**

| | Residual ratio of glutamic acid (%) | Residual ratio of 5'-IMP + 5'-GMP (%) |
|---|---|---|
| Before heating | 100 | 100 |
| 150°C 4 seconds | 95 | 100 |
| 150°C 10 seconds | 99 | 100 |
| 150°C 20 seconds | 86 | 93 |
| 150°C 30 seconds | 83 | 91 |

### <Evaluation of Example 2>

### (High Glutamate-based Seasoning)

There will be shown the results of comparison of the seasoning obtained in Example 2. In Example 1, since the improvement of flavor and the reduction of destruction of taste-imparting components by heating by infusion were suggested, the seasoning was compared with the examples of other seasonings to confirm whether the present production method is superior to a generally known production method. As a known method with reference to Patent Literature 1 and Non Patent Literature 2, seasoning ingredients were placed in a glass bottle and heated in an autoclave at 105°C for 40 minutes or 120°C for 60 minutes, respectively. The results are shown in Tables 5 and 7. In the case of heating at 140°C for 4 seconds, both turbidness and coloring increased about 2-fold as shown in Table 5. However, no difference due to the difference in the heating and holding time was observed in the case of heating by infusion including heating at 150°C. On the other hand, in the existing production method, the turbidness increased by 10 times and the coloring increased by about 5 times or more, compared with that before heating. As shown in Table 5, the quality of taste before and after heating was found to increase in aroma without losing palatability, but the umami and rich taste tended to be "weaker" than those of the standard product. However, umami was lost when heated at 105°C for 40 minutes and heated at 120°C for 60 minutes, tingling stimulus and sourness were imparted with an unpleasant flavor similar to that of an organic solvent. This infers that the flavor of the seasoning is severely deteriorated by heating. In the case of infusion, the flavor was improved when heated at 140°C for 15 seconds, and at the same time, almost no decomposition of glutamic acid contributing to the taste was observed even when heated at 150°C for 30 seconds. Accordingly, this supports that the production method is superior to the existing method. As a result of confirming the bactericidal properties of the heat-resistant bacterium G. stearothermophilus, 1/1000 or less of cells were killed when heated at 140°C for 4 seconds, and no colonies grew by the plate method. Accordingly, this supports that it is possible to provide a microorganism-free seasoning.

### <Table 4>

**Table 4: Change in turbidness and coloring in high glutamate-based seasoning before and after heating**

| | Turbidity (600 nm Abs) | Coloring (red) (520 nm Abs) | Coloring (yellow) (430 nm Abs) |
|---|---|---|---|
| Before heating | 0.050 | 0.098 | 0.224 |
| 140°C 4 seconds | 0.108 | 0.194 | 0.463 |
| 140°C 15 seconds | 0.117 | 0.199 | 0.483 |
| 140°C 30 seconds | 0.113 | 0.183 | 0.444 |
| 150°C 30 seconds | 0.104 | 0.187 | 0.464 |
| Batch heating at 105°C for 40 minutes | 0.724 | 0.360 | 1.132 |
| Batch heating at 120°C for 60 minutes | 0.853 | 0.571 | 1.804 |

### <Table 5>

**Table 5: Change in taste quality of high glutamate seasoning due to heating**

| | 140°C 4 seconds | 140°C 15 seconds | 140°C 30 seconds | 150°C 30 seconds |
|---|---|---|---|---|
| Aroma | 0.03 | 0.05 | 0.10 | 0.25 |
| Flavor | -0.03 | 10 | -0.03 | -0.05 |
| Umami | -0.20 | -0.23 | -0.28 | -0.23 |
| Rich taste | -0.20 | -0.18 | -0.33 | -0.35 |
| Saltiness | 0.00 | 0.05 | 0.05 | 0.05 |

### <Table 6>

**Table 6: Residual ratio of taste-imparting components in high glutamate seasoning before and after heating**

| | Residual ratio of glutamic acid |
|---|---|
| Before heating | 100 |
| 140°C 4 seconds | 98 |
| 140°C 15 seconds | 93 |
| 140°C 30 seconds | 98 |
| 150°C 30 seconds | 97 |
| Batch heating at 105°C for 40 minutes | 86 |
| Batch heating at 120°C for 60 minutes | 69 |

### <Evaluation of Example 3>

There will be shown the results of comparative evaluation of the sample obtained in Example 3. The results are shown in Tables 7 to 9. In the case of heating at 140°C for 4 seconds, both turbidness and coloring increased about 2-fold as shown in Table 8. On the other hand, similarly to Example 2, no difference due to the difference in the heating and holding time was observed in the case of heating by infusion including heating at 150°C. However, in the existing production method, the turbidness increased by 10 times compared with that before heating, while the coloring increased by about 2 times or more. As compared alongside with Example 2, it can be said that the change to temperature as a whole is slower than the existing method. As shown in Table 6, the quality of taste before and after sterilizing was found to increase in aroma without losing palatability, but the umami and rich taste tended to be "weaker" than those of the standard product. However, the umami was lost when heated at 105°C for 40 minutes and heated at 120°C for 60 minutes, and the sample had an unpleasant flavor similar to that of an organic solvent and shiitake mushroom-like aroma. In the case of infusion, the flavor was improved when heated at 140°C for 30 seconds. At the same time, no degradation of glutamic acid contributing to the taste was observed even when heated at 150°C for 30 seconds, and 99% of guanylic acid and inosinic acid remained. Regarding the bactericidal properties of the heat-resistant bacterium G. stearothermophilus, it was confirmed that 1/1,000 or less of cells were killed when heated at 140°C for 4 seconds, and no colonies grew by the plate culture method.

### <Table 7>

**Table 7: Change in turbidness and coloring in high glutamate-based nucleic acid seasoning before and after heating**

| | Turbidity (600 nm Abs) | Coloring (red) (520 nm Abs) | Coloring (yellow) (430 nm Abs) |
|---|---|---|---|
| Before heating | 0.065 | 0.111 | 0.238 |
| 140°C 4 seconds | 0.131 | 0.202 | 0.448 |
| 140°C 15 seconds | 0.125 | 0.189 | 0.421 |
| 140°C 30 seconds | 0.131 | 0.198 | 0.440 |
| 150°C 30 seconds | 0.129 | 0.192 | 0.432 |
| Batch heating at 105°C for 40 minutes | 0.652 | 0.248 | 0.740 |
| Batch heating at 120°C for 60 minutes | 0.920 | 0.453 | 1.505 |

### <Table 8>

**Table 8: Change in taste quality of high glutamate-based nucleic acid seasoning due to heating**

| | 140°C 4 seconds | 140°C 15 seconds | 140°C 30 seconds | 150°C 30 seconds |
|---|---|---|---|---|
| Aroma | 0.08 | 0.10 | 0.15 | 0.18 |
| Flavor | 0.00 | 0.00 | 0.08 | 0.00 |
| Umami | -0.13 | -0.20 | -0.15 | -0.23 |
| Rich taste | -0.03 | -0.03 | -0.08 | -0.15 |
| Saltiness | 0.00 | 0.00 | 0.00 | 0.00 |

### <Table 9>

**Table 9: Residual ratio of taste-imparting components in high glutamate-based nucleic acid seasoning**

| | Residual ratio of glutamic acid (%) | Residual ratio of 5'-IMP + 5'-GMP <%> |
|---|---|---|
| Before heating | 100 | 100 |
| 140°C 4 seconds | 98 | 100 |
| 140°C 15 seconds | 100 | 100 |
| 140°C 30 seconds | 99 | 100 |
| 150°C 30 seconds | 100 | 99 |
| Batch heating at 105°C for 40 minutes | 88 | 75 |
| Batch heating at 120°C for 60 minutes | 71 | 45 |

### <Evaluation of Example 4>

There will be shown the results of comparative evaluation of the sample obtained in Example 4. The results are shown in Tables 10 to 12. As shown in Table 8, the turbidness increased by 1.3 times when heated at 140°C for 4 seconds, while the coloring decreased rather than increased. The turbidity was nearly twice or more when heated at 105°C for 40 minutes and heated at 120°C for 60 minutes, but the coloring of red was decreased to 20% of the original level and the coloring of yellow was decreased to 70% of the original level. On the other hand, as for the quality of taste, the aroma generally shows an approximately positive correlation with the heating and holding time, but the flavor is basically stronger than the standard product. There are peaks having maximum values when heated at 140°C for 15 seconds and when heated at 150°C for 30 seconds. On the other hand, the flavor and the rich taste show an inverse correlation. Under the above two peak conditions, the intensity is slightly lower than that of the standard product, resulting in a mild mouthfeel. There was a condition where all scores were positive, and the heating condition was at 140°C for 30 seconds. Similarly to Example 2, no difference in turbidness and coloring due to the difference in the heating and holding time was observed in the case of heating by infusion including heating at 150°C. However, the umami was lost when heated at 120°C for 60 minutes, and the sample had an unpleasant aroma and flavor similar to leek odor and garlic odor. The sample when heated at 105°C for 40 minutes had an unpleasant sulfur odor similar to an organic solvent. In the case of infusion, it was suggested that glutathione tended to slightly decrease after heating at 140°C for 15 seconds, but 94% remained even when heated at 150°C for 60 seconds, compared with that before heating. However, glutathione was decreased to nearly 30% when batch heated at 105°C for 40 minutes, and it was dramatically decreased to 2% when batch heated at 120°C for 60 minutes. Note that, regarding the bactericidal properties of the heat-resistant bacterium G. stearothermophilus, 10³ initial cells were reduced by one digit when heated at 140°C for 4 seconds, and the cells were confirmed to be completely killed when heated at 140°C for 15 seconds.

### <Table 10>

**Table 10: Change in turbidness and coloring in high glutathione-based seasoning before and after heating**

| | Turbidity (600 nm Abs₎ | Coloring (red) (520 nm Abs) | Coloring (yellow) (430 nm Abs) |
|---|---|---|---|
| Before heating | 0.477 | 0.236 | 0.625 |
| 140°C 4 seconds | 0.620 | 0.210 | 0.573 |
| 140°C 15 seconds | 0.576 | 0.233 | 0.622 |
| 140°C 30 seconds | 0.586 | 0.246 | 0.649 |
| 150°C 30 seconds | 0.812 | 0.194 | 0.555 |
| 150°C 60 seconds | 0.704 | 0.272 | 0.709 |
| Batch heating at 105°C for 40 minutes | 0.887 | 0.197 | 0.582 |
| Batch heating at 120°C for 60 minutes | 1.172 | 0.043 | 0.398 |

### <Table 11>

**Table 11: Change in taste quality of high glutathione-based seasoning due to heating**

| | 140°C 4 seconds | 140°C 15 seconds | 140°C 30 seconds | 150°C 30 seconds | 150°C 60 seconds |
|---|---|---|---|---|---|
| Aroma | 0.20 | 0.23 | 0.28 | 0.25 | 0.23 |
| Flavor | 0.15 | 0.25 | 0.15 | 0.30 | 0.10 |
| Umami | -0.10 | -0.13 | 0.00 | -0.15 | 0.00 |
| Rich taste | -0.13 | -0.15 | 0.03 | -0.15 | 0.08 |
| Saltiness | 0.00 | 0.00 | 0.00 | 0.00 | 0.23 |

### <Table 12>

**Table 12: Residual ratio of taste-imparting components in high glutathione-based seasoning before and after heating**

| | Residual ratio of glutathione (%) |
|---|---|
| Before heating | 100 |
| 140°C 4 seconds | 97 |
| 140°C 15 seconds | 100 |
| 140°C 30 seconds | 97 |
| 150°C 30 seconds | 95 |
| 150°C 60 seconds | 94 |
| Batch heating at 105°C for 40 minutes | 28 |
| Batch heating at 120°C for 60 minutes | 2 |

### <Evaluation of Example 5>

Tables 13 to 15 show the evaluation results of the solution obtained after heating in Example 5. In this example, the test was conducted for the purpose of verifying what kind of influence exerted on pure taste-imparting components alone by heating process, how it differed from the heat influence on the taste-imparting components in the seasoning, in other words, whether the taste-imparting components behaved differently for each seasoning in a case where the pH and the concentration of the undiluted solution were adjusted to be the same as those of the seasoning sample.

As shown in Table 14, it was found that pure products hardly decomposed even after heating at 150°C for 60 seconds. 97% remained even when heated at 105°C for 40 minutes, and 88% remained even when heated at 120°C for 60 minutes. It is known that glutamic acid at a low or high pH is condensed in a molecule by heating to form a lactam ring, and is converted to pyroglutamic acid. However, Tables 14 and 15 suggested the formation of non-organic acids other than pyroglutamic acid. Further, when comparing each seasoning in the case of heating at 150°C for 30 seconds in Table 16, there is a difference in the attenuation rate for the heating intensity. It is considered that the attenuation rates of the taste-imparting components in generally distributed seasonings shift depending on their component composition. One of the major differences in the composition of the seasoning ingredient used in this test is the total amino acid content. However, it is difficult to determine the cause because a plurality of complex reactions proceeds simultaneously due to natural substances. However, in the method for producing a seasoning using the present patent, it is possible to impart a flavor superior in controllability according to each seasoning while minimizing the destruction of the taste-imparting components. In addition, the heating and holding time is reduced while killing the heat-resistant bacteria, whereby it is possible to make use of the fresh flavor and aroma of the seasoning ingredient and to control the flavor to be imparted by heating so as to be reduced.

### <Table 13>

**Table 13: Change in physical properties in sodium glutamate aqueous solution before and after heating**

| | Solid content (wt%) | Residual ratio of Glu (%) | Pyroglutamic acid content (wt%) |
|---|---|---|---|
| Before heating | 14.7 | 100 | 0.03 |
| 140°C 4 seconds | 13.9 | 100 | 0.05 |
| 140°C 15 seconds | 13.6 | 100 | 0.07 |
| 140°C 30 seconds | 13.5 | 98 | 0.19 |
| 150°C 30 seconds | 13.7 | 100 | 0.13 |
| 150°C 60 seconds | 14.1 | 99 | 0.60 |
| 105°C 40 seconds | 15.6 | 97 | 1.28 |
| 120°C 60 seconds | 16.0 | 88 | 6.19 |

### <Table 14>

**Table 14: Organic acid content in sodium glutamate aqueous solution before and after heating * Malic acid, fumaric acid, acetic acid, and lactic acid were not detected.**

| | α-ketoglutaric acid | Citric acid | Malonic acid | Succinic acid | Formic acid | Pyroglutamic acid |
|---|---|---|---|---|---|---|
| | ppm | | | | | |
| Before heating | | | | | | 40.7 |
| 140°C 4 seconds | 6.5 | | | 4.4 | 4.0 | 67.1 |
| 140°C 15 seconds | 4.8 | | | | | 98.3 |
| 140°C 30 seconds | | | | | | 256.4 |
| 150°C 30 seconds | | 5.3 | 3.4 | 8.2 | | 180.3 |
| 150°C 60 seconds | 4.1 | | 5.6 | | | 837.1 |
| 105°C 40 seconds | | | | | 3.9 | 1996.0 |
| 120°C 60 seconds | | | | | | 9881.0 |

### <Table 15>

**Table 15: Shift of residual ratio of glutamic acid before and after heating in Production Examples 1 to 3, and 5**

| | Production Example 1 (%) | Production Example 2 (%) | Production Example 3 (%) | Glutamic acid |
|---|---|---|---|---|
| Before heating | 100 | 100 | 100 | 100 |
| 140°C 4 seconds | 95 | 98 | 98 | 100 |
| 140°C 15 seconds | | 93 | 100 | 100 |
| 140°C 30 seconds | | 98 | 99 | 98 |
| 150°C 10 seconds | 99 | | | |
| 150°C 20 seconds | 86 | | | |
| 150°C 30 seconds | 83 | 97 | 100 | 100 |
| 150°C 60 seconds | | | | 99 |
| Batch heating at 105°C for 40 minutes | | 86 | 88 | 97 |
| Batch heating at 120°C for 60 minutes | | 69 | 71 | 88 |

### <Evaluation of Example 6>

There will be shown the results of comparative evaluation of samples obtained in Example 6. This example was carried out for the purpose of examining whether the seasoning production method according to the present patent was applicable to seasonings other than yeast extract. The results are shown in Tables 15 to 17. As compared with the coloring before heating, the coloring increased according to the heating intensity from the process of heating at 80°C for 30 minutes by the general production method to the process of heating by infusion at 130°C, 140°C, and 150°C. The coloring at 520 nm increased by 3.7 times at the maximum, and the coloring at 430 nm increased by 1.9 times. On the other hand, glutamic acid, i.e., a taste component of umami, decreased as compared with the sample before heating at 80°C for 30 minutes, but tended to increase to 102% at 150°C due to decomposition of a part of free protein when heated by infusion at 130 to 150°C. Burnt aroma as a characteristic of heat-processed soy sauce was generated at 150°C for 30 seconds, and samples having approximately equivalent potency were obtained. Further, when heated at 140°C for 30 seconds, the equivalent potency as before heating was maintained. However, in a case where the heating intensity was lower than that, a different aroma pattern was produced. In the case of heating at 140°C for 4 seconds, the aroma changed to a bright aroma that was light and rich in umami, like dried bonito dashi. In addition, in the case of heating at 130°C for 4 seconds, the flavor when heated at 140°C for 4 seconds was maintained, and the aroma potency was just evaluated to be beyond all the samples. Note that, the heat-resistant bacterium G. stearothermophilus was not detected from this sample, and it was confirmed that, regarding the bactericidal properties, 10² initial cells of general viable bacteria were completely killed when heated at 130°C for 4 seconds. It is found that the heating method according to the present patent can be used as a new seasoning that cannot be reproduced by a plate heat exchanger or batch heating. That is, since the temperature can be raised to the target temperature instantaneously and without overheating, it is possible to avoid an enzymatic reaction having an optimum temperature in the passing temperature zone. It is known that the imparting of flavor by heating is caused not only by the Maillard reaction group but also by a Strecker decomposition reaction, and that the optimum temperature for decomposition and condensation of each substrate varies. This example also shows that in a case where the solution to be tested is a complex mixture, it is not a simple matter that increasing the temperature increases the Maillard odor proportionately. In other words, as the temperature varies, the aroma profile changes. The product heated at 140°C for 4 seconds and the product heated at 130°C show that seasonings having different flavors can be produced if the temperature varies. The test sections at 130°C shows that it is possible to produce soy sauce with a new flavor that is not present in existing soy sauce.

### <Table 16>

**Table 16: Change in coloring in kiage soy-sauce before and after heating**

| | Coloring (red) (520 nm Abs) | Coloring (yellow) (430 nm Abs) |
|---|---|---|
| Before heating | 0.234 | 0.732 |
| Batch heating at 80°C for 30 minutes | 0.235 | 0.843 |
| 130°C 4 seconds | 0.779 | 1.186 |
| 140°C 4 seconds | 0.756 | 1.196 |
| 140°C 30 seconds | 0.791 | 1.263 |
| 150°C 30 seconds | 0.871 | 1.393 |

### <Table 17>

**Table 17: Content of taste-imparting components in kiage soy-sauce before and after heating**

| | Glutamic acid content (%) |
|---|---|
| Before heating | 100 |
| Batch heating at 80°C for 30 minutes | 94 |
| 130°C 4 seconds | 96 |
| 140°C 4 seconds | 97 |
| 140°C 30 seconds | 100 |
| 150°C 30 seconds | 102 |

### <Table 18>

**Table 18: Burnt aroma flavored by heating kiage soy-sauce**

| | Before heating | 80°C 30 minutes | 130°C 4 minutes | 140°C 4 minutes | 140°C 30 minutes | 150°C 30 minutes |
|---|---|---|---|---|---|---|
| Flavoring potency | 0.21 | 0.26 | 0.33 | 0.24 | 0.23 | 0.28 |

The present invention is not limited to the above-described embodiments, various modifications are possible, and embodiments obtained by appropriately combining technical means disclosed in different embodiments are included in the technical scope of the invention.

### Industrial Applicability

It is considered that the attenuation rate of taste-imparting components in seasonings generally distributed also depends on the component composition, but most of the seasonings are obtained by processing components from animals and plants in the world of nature using a mixing step, a fermenting step, an aging step, a heating step, a vibrating step, and the like. The method for producing a seasoning using the present patent takes advantage that it is possible to raise the temperature instantaneously even at 150°C, and to control the heating and holding time and the heating temperature extremely accurately and quickly, whereby it is possible to minimize the destruction of the taste-imparting components for any of the above-mentioned food products under the corresponding heating conditions, and at the same time, to impart a flavor superior in controllability to the food products. Unlike batch heating using a tank, the processing amount can be freely changed by adjusting the flow rate, and processing can be continuously performed in a short time. The fact that a large tank is not required saves resources such as chemicals for washing, washing water, electricity, and manpower, and is a superior production method that can be used in the field such as high-mix low-volume production. The present invention suppresses the influence on the taste even though the treatment is performed at a high temperature. In terms of providing seasonings that can be used for food products with a long shelf life whose limits will be more tightened and whose demand will increase in the future, the production method is expected to be used in a wide range of food products because the method can kill and inactivate heat-resistant bacteria causing food deterioration, which are difficult to sterilize, during the heating process.

## Claims

1. A method for producing a seasoning in which a seasoning ingredient is heat-processed with steam, wherein, as a heating method, heating is performed by an infusion type direct heating method, and, after heating, cooling is performed by a reduced pressure cooling method.

2. The method for producing a seasoning according to claim 1, wherein a heating temperature is 120 to 170°C, the heating time is 0.1 to 60 seconds, and the temperature is reduced to 100°C or less by a reduced pressure cooling method after heating.

3. The method for producing a seasoning according to claim 1 or 2, wherein the temperature is allowed to reach the heating temperature in an atmosphere in which a saturated steam of 0.2 to 0.8 MPa is filled in a heating can.

4. The production method according to any one of claims 1 to 3, wherein heating conditions are as follows: a temperature difference from a liquid temperature of the seasoning ingredient immediately before heating is 30°C or more; and an amount of time elapsed between start of heating and completion of reaching the temperature is 0.5 seconds or less.

5. The production method according to any one of claims 1 to 4, wherein the seasoning ingredient is adjusted so as to have a solid content of 5 to 70 wt% and heat-processed.
